# EUROPÄISCHE PATENTANMELDUNG

(11) **EP 4 494 920 A1**
(43) Veröffentlichungstag der Anmeldung: **22.01.2025**
(21) Anmeldenummer: 24187519.4
(22) Anmeldetag: 09.07.2024
(51) Int. Cl.: B60L 53/302, B60L 53/53, B60L 53/62, B60L 53/10

(54) **VERFAHREN ZUM BETREIBEN EINER KLIMATISIERUNGSVORRICHTUNG EINER LADESTATION, STEUERUNGSVORRICHTUNG, KLIMATISIERUNGSVORRICHTUNG UND LADESTATION**

(30) Priorität: 13.07.2023 DE 102023118659
(71) Anmelder: ads-tec Energy GmbH, 72622 Nürtingen (DE)
(72) Erfinder: BAREIß, Simon, 73635 Rudersberg (DE); RAMIN, Jörg, 73230 Kirchheim (DE)
(74) Vertreter: Kordel, Mattias

(57) **Zusammenfassung**

Die Erfindung betrifft ein Verfahren zum Betreiben einer Klimatisierungsvorrichtung (7) einer Ladestation (1) für eine elektrische Vorrichtung, wobei die Klimatisierungsvorrichtung (7) eingerichtet ist, um die Ladestation (1) wahlweise in einem Aktivmodus aktiv und in einem Passivmodus passiv zu temperieren, wobei in Abhängigkeit von einem Thermozustand (T) der Ladestation (1) und einem Ladezustandsparameter (L) eines elektrischen Vorrichtungsenergiespeichers der mit der Ladestation (1) verbundenen elektrischen Vorrichtung zwischen dem Passivmodus und dem Aktivmodus gewechselt wird.

Außerdem betrifft die Erfindung eine Steuerungsvorrichtung (3), eine Klimatisierungsvorrichtung (7) und eine Ladestation (1) zur Durchführung eines solchen Verfahrens, eine Klimatisierungsvorrichtung (7) und eine Ladestation (1) mit einer solchen Steuerungsvorrichtung (3), und eine Ladestation (1) mit einer solchen Klimatisierungsvorrichtung (3).

## Beschreibung

Die Erfindung betrifft ein Verfahren zum Betreiben einer Klimatisierungsvorrichtung einer Ladestation für eine elektrische Vorrichtung, insbesondere für ein Elektrofahrzeug, eine Steuerungsvorrichtung, eine Klimatisierungsvorrichtung und eine Ladestation.

Fortschritte bei der Entwicklung von Batteriespeichern ermöglichen eine höhere elektrische Kapazität bei insbesondere gleichbleibendem Bauraum des Batteriespeichers. Dies führt dazu, dass in Elektrofahrzeugen Batteriespeicher - auch als Antriebsenergiespeicher bezeichnet - mit einer höheren elektrischen Kapazität verbaut werden können. Die Nutzer von Elektrofahrzeugen erwarten üblicherweise eine rasche Ladung des Batteriespeichers, um zeitnah weiterfahren zu können und sind somit nicht unbedingt bereit, aufgrund eines eine größere elektrische Kapazität aufweisenden Batteriespeichers länger an der Ladestation zu verweilen. Aufgrund dessen ist es notwendig, dass eine Ladeleistung zum Laden des Batteriespeichers erhöht wird. Eine Erhöhung der Ladeleistung geht insbesondere mit einer Erhöhung des Ladestroms und/oder der Ladespannung einher. Die dabei in der Ladestation insbesondere durch elektronische Module, insbesondere durch eine Leistungselektronik, entstehende Wärme wird üblicherweise von einer Klimatisierungsvorrichtung der Ladestation abgeführt. Es ist bekannt, eine solche Klimatisierungsvorrichtung in einem Aktivmodus, insbesondere unter Verwendung eines thermodynamischen Kreisprozesses, und in einem Passivmodus, insbesondere unter Verwendung von Konvektion, zu betreiben. Die Umschaltung zwischen dem Aktivmodus und dem Passivmodus erfolgt dabei abhängig von einer Innentemperatur der Ladestation und einer die Ladestation umgebenden Umgebungstemperatur, insbesondere Umgebungslufttemperatur. Steigt die Innentemperatur oder die Umgebungstemperatur an und überschreitet einen vorgegebenen Schwellenwert, wird von dem Passivmodus in den Aktivmodus gewechselt. Beim Betreiben der Klimatisierungsvorrichtung in dem Aktivmodus wird vergleichsweise viel elektrische Energie benötigt, was entsprechende Kosten verursacht. Die elektrische Energie ist notwendig, um einen Kältemittelverdichter, insbesondere einen Kompressor, des thermodynamischen Kreisprozesses zu betreiben. Die ständige Verwendung des Kältemittelverdichters führt dazu, dass ein für diesen vorgegebenes Wartungs- oder Austauschintervall vergleichsweise schnell erreicht wird, sodass der Kältemittelverdichter gewartet oder ausgetauscht werden muss. Dies verursacht Wartungs- und Materialkosten, insbesondere für einen neuen Kältemittelverdichter.

Der Erfindung liegt daher die Aufgabe zugrunde, ein Verfahren zum Betreiben einer Klimatisierungsvorrichtung einer Ladestation für eine elektrische Vorrichtung, insbesondere für ein Elektrofahrzeug, eine Steuerungsvorrichtung, eine Klimatisierungsvorrichtung und eine Ladestation zu schaffen, wobei die genannten Nachteile reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen.

Die Aufgabe wird insbesondere gelöst, indem ein Verfahren zum Betreiben einer Klimatisierungsvorrichtung einer Ladestation für eine elektrische Vorrichtung, insbesondere für ein Elektrofahrzeug, geschaffen wird. Die Klimatisierungsvorrichtung ist eingerichtet, um die Ladestation wahlweise in einem Aktivmodus aktiv und in einem Passivmodus passiv zu temperieren. In Abhängigkeit von einem Thermozustand der Ladestation und mindestens einem Ladezustandsparameter, der insbesondere charakteristisch ist für einen Ladezustand eines elektrischen Vorrichtungsenergiespeichers der zu ladenden elektrischen Vorrichtung, insbesondere eines Antriebsenergiespeichers des mit der Ladestation verbundenen Elektrofahrzeugs, wird zwischen dem Passivmodus und dem Aktivmodus gewechselt.

In einer Ausführungsform ist der mindestens eine Ladezustandsparameter ausgewählt aus dem insbesondere momentanen Ladezustand (englisch: State of Charge; abgekürzt: SoC) des Vorrichtungsenergiespeichers selbst, einer insbesondere momentan maximal möglichen Ladeleistung des Vorrichtungsenergiespeichers, und einem insbesondere momentan verbleibenden Ladezustand (englisch: Remaining SoC) des Vorrichtungsenergiespeichers.

Insbesondere ist der verbleibende Ladezustand (englisch: Remaining SoC) ein Differenzwert, der erhalten wird, indem von dem vollen Ladezustand (englisch: Full SoC), insbesondere bei 100 %, der momentane Ladezustand (englisch: Current SoC) subtrahiert wird. Der - dem Anwender als voll, insbesondere 100 % angezeigte - volle Ladezustand kann von einem technisch maximal möglichen Ladezustand von Energiespeicherzellen des Vorrichtungsenergiespeichers abweichen.

Insbesondere ist der volle Ladezustand ein Ladezustand, bis auf den ein Anwender den Vorrichtungsenergiespeicher bei bestimmungsgemäßem Gebrauch maximal aufladen kann, wenn ein vom Anwender gesetztes Ladelimit auf 100 % eingestellt ist. Insbesondere ist der volle Ladezustand ein voller Ladezustand (Full SoC) gemäß ISO 15118-2 und/oder ISO 15118-20. Insbesondere wird der volle Ladezustand von der elektrischen Vorrichtung an die Ladestation übermittelt. Wenn der volle Ladezustand nicht übermittelt wird, insbesondere der Ladestation also nicht bekannt ist, wird alternativ ein maximaler Ladezustand des Vorrichtungsenergiespeichers für das Schnelladen (englisch: Bulk SoC; Grenze zwischen einer ersten Ladephase mit konstantem Ladestrom (CC: constant current) und einer zweiten Ladephase mit einer konstanten Ladespannung (CV: constant voltage) des Schnelladevorgangs, insbesondere gemäß ISO 15118-2 und/oder ISO 15118-20) an die Ladestation übermittelt. Wenn der maximale Ladezustand des Vorrichtungsenergiespeichers für das Schnelladen nicht übermittelt wird, insbesondere der Ladestation also ebenfalls nicht bekannt ist, kann die Ladestation einen vorbestimmten Ersatzwert, beispielsweise 90 %, verwenden. Somit ist es möglich, den verbleibenden Ladezustand ausgehend von dem vollen Ladezustand (Full SoC) des Vorrichtungsenergiespeichers oder ausgehend von dem maximalen Ladezustand des Vorrichtungsenergiespeichers für das Schnelladen (Bulk SoC) oder ausgehend von einem Ersatzwert, beispielsweise 90 %, zu berechnen.

Vorteilhaft erfolgt die Umschaltung zwischen dem Passivmodus und dem Aktivmodus in Abhängigkeit von einer noch in den Vorrichtungsenergiespeicher zu ladenden Restenergiemenge. Bei Vorrichtungsenergiespeichern ist die momentan maximal mögliche Ladeleistung nämlich unter anderem abhängig von dem Ladezustand des Vorrichtungsenergiespeichers. Je höher der Ladezustand, desto geringer ist die maximal mögliche Ladeleistung und desto geringer ist die noch in den Vorrichtungsenergiespeicher zu ladende Restenergiemenge und die damit verbundene Wärmeentwicklung. Diese Ladeleistungscharakteristik wird vorteilhaft in dem Verfahren berücksichtigt. Insbesondere wird ein anhand des Thermozustands vorgesehener Wechsel in den Aktivmodus abhängig von dem mindestens einen Ladezustandsparameter vermieden und die Ladestation weiter in dem Passivmodus temperiert. Insbesondere ist auch hier der mindestens eine Ladezustandsparameter ausgewählt aus dem insbesondere momentanen Ladezustand (englisch: State of Charge; abgekürzt: SoC) des Vorrichtungsenergiespeichers selbst, einer insbesondere momentan maximal möglichen Ladeleistung des Vorrichtungsenergiespeichers, und einem insbesondere momentan verbleibenden Ladezustand (englisch: Remaining SoC) des Vorrichtungsenergiespeichers. So ist es möglich, die Ladestation weiter in dem Passivmodus zu temperieren, insbesondere einen eigentlich anhand des Thermozustands vorgesehenen Wechsel in den Aktivmodus zu vermeiden, wenn der Ladezustand relativ hoch ist, insbesondere also nur noch eine relativ geringe Energiemenge in den Vorrichtungsenergiespeicher geladen werden soll, beispielsweise wenn der Vorrichtungsenergiespeicher zu 90 % aufgeladen ist und bis 100 % geladen werden soll oder wenn der Vorrichtungsenergiespeicher zu 40 % aufgeladen ist und ein Anwender ein Ladelimit von 50 % eingestellt hat, und/oder wenn die mögliche Ladeleistung relativ gering ist. In dem Passivmodus wird vorteilhaft auf eine Verwendung des thermodynamischen Kreisprozesses, insbesondere des Kältemittelverdichters, verzichtet, wodurch ein elektrischer Energieverbrauch reduziert wird. Insbesondere wird der Kältemittelverdichter seltener verwendet. Dadurch wird das vorgegebene Wartungsintervall oder das vorgegebene Austauschintervall hinausgezögert. Dies reduziert insbesondere Wartungskosten und Austauschkosten.

Insbesondere hängt die noch in den Vorrichtungsenergiespeicher zu ladende Restenergiemenge von einem technischen Ladelimit des Vorrichtungsenergiespeichers oder von einem durch einen Anwender gesetztes Ladelimit ab. Insbesondere wird das Ladelimit von der elektrischen Vorrichtung an die Ladestation übermittelt. Insbesondere unter Verwendung des Ladekommunikationsstandards ISO 15118-2 und/oder ISO 15118-20.

Unter dem Begriff "temperieren" wird im Kontext der vorliegenden technischen Lehre insbesondere ein Kühlen der Ladestation mittels eines Kühlmediums, sowie auch ein Rückkühlen des Kühlmediums selbst verstanden.

In dem Passivmodus wird das Kühlmedium der Ladestation insbesondere mittels Konvektion, insbesondere mittels eines mit einer Rückkühlungs-Kühlluft in Kontakt stehenden ersten Wärmetauschers - auch als Passivkühler bezeichnet - temperiert. Insbesondere wird in dem Passivmodus kein thermodynamischer Kreisprozess, insbesondere kein Kältemittelverdichter, verwendet. Insbesondere ist in dem Passivmodus eine Aktivierung des Kältemittelverdichters nicht vorgesehen, insbesondere unterbunden. Insbesondere wird der erste Wärmetauscher von der Rückkühlungs-Kühlluft durchströmt. Insbesondere wird die Rückkühlungs-Kühlluft mittels einer Lüftervorrichtung zu dem ersten Wärmetauscher gefördert, insbesondere gesaugt. Insbesondere wird der erste Wärmetauscher, insbesondere strömungsgetrennt, von dem Kühlmedium der Ladestation durchströmt. Insbesondere überträgt der erste Wärmetauscher Wärme von dem Kühlmedium auf die Rückkühlungs-Kühlluft. Insbesondere ist die Rückkühlungs-Kühlluft eine insbesondere angesaugte Umgebungsluft der Ladestation.

In dem Aktivmodus wird das Kühlmedium der Ladestation insbesondere mittels des thermodynamischen Kreisprozesses temperiert. Insbesondere wird in dem Aktivmodus der Kältemittelverdichter, insbesondere ein Kompressor, als Teil des thermodynamischen Kreisprozesses verwendet. Insbesondere ist in dem Aktivmodus eine Aktivierung des Kältemittelverdichters freigegeben, insbesondere vorgesehen. Insbesondere wird der thermodynamische Kreisprozess von einem Kältemittel durchströmt. Insbesondere durchströmt das Kältemittel einen - auch als Aktivkühler bezeichneten - zweiten Wärmetauscher. Insbesondere wird der zweite Wärmetauscher, insbesondere strömungsgetrennt, von dem Kühlmedium der Ladestation durchströmt. Insbesondere überträgt der zweite Wärmetauscher Wärme von dem Kühlmedium auf das Kältemittel.

Es ist möglich, dass das Kühlmedium der Ladestation in dem Aktivmodus mittels des thermodynamischen Kreisprozesses - vermittelt über den Aktivkühler - und zusätzlich mittels Konvektion, insbesondere mittels des mit der Rückkühlungs-Kühlluft in Kontakt stehenden ersten Wärmetauschers (Passivkühler) temperiert wird. Insbesondere wird ein erster Wärmeanteil der Wärme des Kühlmediums mittels des als ersten Wärmetauscher ausgebildeten Passivkühlers auf die Rückkühlungs-Kühlluft übertragen. Insbesondere wird ein zweiter Wärmeanteil der Wärme des Kühlmediums mittels des als zweiten Wärmetauscher ausgebildeten Aktivkühlers auf das Kältemittel übertragen.

Gemäß einer Weiterbildung der Erfindung ist vorgesehen, dass der Thermozustand der Ladestation durch wenigstens einen Zustandsparameter bestimmt ist, der ausgewählt ist aus einer Gruppe, bestehend aus: Einer Innentemperatur der Ladestation, einer Energiespeichertemperatur eines elektrischen Energiespeichers der Ladestation, einer Kühlmediumtemperatur des Kühlmediums der Klimatisierungsvorrichtung, einem Wärmeverlustleistungswert, der charakteristisch für einen Wärmeverlust elektrischer Komponenten der Ladestation ist, einer Umgebungstemperatur, insbesondere Umgebungslufttemperatur, einer Lüfterdrehzahl der Lüftervorrichtung der Ladestation, einer Kondensationstemperatur, eines Kondensationsdrucks des Kältemittels, und einer Kombination von wenigstens zwei dieser Zustandsparameter. Vorteilhaft kann der Thermozustand der Ladestation besonders genau bestimmt werden.

Insbesondere ist die Innentemperatur der Ladestation eine Gehäuseinnentemperatur der Ladestation. Insbesondere sind die elektrischen Komponenten der Ladestation Leistungselektroniken der Ladestation. Insbesondere ist die Umgebungstemperatur, insbesondere Umgebungslufttemperatur, eine Temperatur der Umgebungsluft außerhalb und in der Nähe der Ladestation. Insbesondere ist die Umgebungstemperatur, insbesondere Umgebungslufttemperatur, eine Temperatur, die eine von der Ladestation angesaugte Luft - dann als Rückkühlungs-Kühlluft bezeichnet - zur Temperierung aufweist. Insbesondere ist die Lüfterdrehzahl eine Lüfterdrehzahl der dem ersten Wärmetauscher zugeordneten Lüftervorrichtung.

In einer Ausführungsform ist der Wärmeverlustleistungswert ein momentaner Wärmeverlustleistungswert. In einer anderen Ausführungsform ist der Wärmeverlustleistungswert ein mittels eines Berechnungsmodells, insbesondere eines thermischen Modells, erhaltener, insbesondere berechneter, Wärmeverlustleistungserwartungswert. Vorteilhaft kann der während des gesamten Ladevorgangs des Vorrichtungsenergiespeichers zu erwartende Wärmeverlustleistungserwartungswert bereits zu Beginn des Ladevorgangs anhand des mindestens einen Ladezustandsparameters des Vorrichtungsenergiespeichers, der als Eingangswert für das Berechnungsmodell dient, abgeschätzt, insbesondere berechnet werden.

In einer Ausführungsform ist das Kühlmedium ein wasserbasiertes Medium, insbesondere ein Wasser-Glykol-Gemisch.

Gemäß einer Weiterbildung der Erfindung ist vorgesehen, dass der Passivmodus aktiviert wird, wenn ein Kühlleistungswertvergleich, insbesondere eine Kapazitätsprüfung, insbesondere eine Kühlkapazitätsprüfung ergibt, dass ein maximaler passiver Kühlleistungswert, der charakteristisch für eine, insbesondere momentan, maximal mögliche passive Kühlleistung der Klimatisierungsvorrichtung ist, größer ist als eine Summe aus dem Wärmeverlustleistungswert und einem Offsetleistungswert. Der Offsetleistungswert wird abhängig von dem Ladezustandsparameter des Vorrichtungsenergiespeichers der mit der Ladestation verbundenen elektrischen Vorrichtung, insbesondere des Elektrofahrzeugs, bestimmt.

In einer Ausführungsform ist der maximale passive Kühlleistungswert abhängig von der Kühlmediumtemperatur, insbesondere innerhalb einer Wärmespeichervorrichtung der Ladestation, in der das Kühlmedium vorgehalten wird, von der Umgebungstemperatur, insbesondere Umgebungslufttemperatur und von der, insbesondere maximalen, Lüfterdrehzahl der Lüftervorri chtung.

Insbesondere ist der maximale passive Kühlleistungswert ein positiver Wert, insbesondere ein Wert mit einem positiven Vorzeichen. Insbesondere ist der Wärmeverlustleistungswert ein positiver Wert, insbesondere ein Wert mit einem positiven Vorzeichen. Insbesondere ist der Offsetleistungswert ein positiver oder ein negativer Wert, insbesondere ein Wert mit einem positiven oder negativen Vorzeichen. Ob der Offsetleistungswert als positiver oder negativer Wert in den Kühlleistungswertvergleich eingeht, hängt insbesondere von einem positiven Beitrag und einem negativen Beitrag ab, mittels denen der Offsetleistungswert bestimmt, insbesondere errechnet wird. Der Offsetleistungswert berücksichtigt als positiven Beitrag insbesondere einen Wärmeverlustleistungsparameter. Der Wärmeverlustleistungsparameter enthält insbesondere einen oder mehrere Wärmeverlustleistungsteilwerte, die nicht in dem Wärmeverlustleistungswert enthalten sind, wie beispielsweise einen Wärmeverlustleistungswert von einer Anzeigevorrichtung der Ladestation. Der Offsetleistungswert berücksichtigt als negativen Beitrag insbesondere einen Ladezustandsparameterkorrekturwert, der aus dem mindestens einen Ladezustandsparameter bestimmt wird. Der Ladezustandsparameterkorrekturwert ist insbesondere ein Wärmeverlustleistungskorrekturwert, insbesondere eine Art passiver Kühlleistungswertpuffer, der den Passivmodus noch ermöglicht, obwohl in den Aktivmodus gewechselt werden müsste. Es ist beispielsweise eine Situation denkbar, in der der maximale passive Kühlleistungswert geringer ist als der Wärmeverlustleistungswert. Die Klimatisierungsvorrichtung ist dann nicht mehr in der Lage, ein thermisches Gleichgewicht in der passiv temperierten Ladestation herzustellen. Die Ladestation erwärmt sich kontinuierlich, insbesondere über einen längeren Zeitraum. Die Klimatisierungsvorrichtung müsste nun in den Aktivmodus wechseln, insbesondere die Ladestation in dem Aktivmodus temperieren. Da Schnelladevorgänge aber üblicherweise nicht sehr lange dauern, ist es möglich, die Ladestation auch dann im Passivmodus zu temperieren, wenn die Klimatisierungsvorrichtung nicht mehr in der Lage ist, ein thermisches Gleichgewicht herzustellen, da das thermische Ungleichgewicht nur von relativ kurzer Dauer ist. Es wird somit eine gewisse Erwärmung der Ladestation toleriert, da davon auszugehen ist, dass der Wärmeverlustleistungswert nach dem Abschluss des Schnelladevorgangs sinkt und die Klimatisierungsvorrichtung dann wieder in der Lage ist, die Ladestation ausreichend passiv zu temperieren. Diese Toleranz, insbesondere das tolerierte thermische Ungleichgewicht über eine gewisse Zeitdauer, wird in dem Verfahren mittels des negativen Beitrags im Offsetleistungswert berücksichtigt.

Gemäß einer Weiterbildung der Erfindung ist vorgesehen, dass der Offsetleistungswert mittels einer Offsetkennlinie bestimmt wird. Die Offsetkennlinie weist als zumindest einen Eingangswert den mindestens einen Ladezustandsparameter und als Ausgangswert den Offsetleistungswert auf. Auf diese Weise ist vorteilhaft eine besonders einfache Bestimmung des Offsetleistungswerts möglich.

In einer Ausführungsform weist die Offsetkennlinie als den zumindest einen Eingangswert den insbesondere momentanen Ladezustand und die insbesondere momentan maximal mögliche Ladeleistung des Vorrichtungsenergiespeichers auf. Insbesondere ist die Offsetkennlinie eine mehrdimensionale Kennlinie. Insbesondere weist die Offsetkennlinie zwei Eingangsdimensionen und eine Ausgangsdimension auf.

In einer Ausführungsform weist die Offsetkennlinie als einen weiteren Eingangswert des zumindest einen Eingangswerts den Wärmeverlustleistungsparameter auf.

Gemäß einer Weiterbildung der Erfindung ist vorgesehen, dass vor der Bestimmung des Offsetleistungswerts ermittelt wird, ob ein Energiesparmodus der Ladestation aktiviert ist. Bei aktiviertem Energiesparmodus wird als die Offsetkennlinie eine Eco-Offsetkennlinie zur Bestimmung des Offsetleistungswerts verwendet.

Insbesondere wird bei deaktiviertem Energiesparmodus als die Offsetkennlinie eine Standard-Offsetkennlinie verwendet. Insbesondere sind in der Ladestation genau zwei Offsetkennlinien, nämlich die Standard-Offsetkennlinie und die Eco-Offsetkennlinie, abgespeichert.

Insbesondere unterscheiden sich die Standard-Offsetkennlinie und die Eco-Offsetkennlinie dadurch, dass bei selbem Ladezustand (SoC) oder selbem verbleibendem Ladezustand (Remaining SoC) bei Verwendung der Eco-Offsetkennlinie ein absolut - mit Vorzeichen gesehen - kleinerer Offsetleistungswert resultiert, als bei Verwendung der Standard-Offsetkennlinie. An einem Beispiel verdeutlicht: Bei der Verwendung der Standard-Offsetkennlinie wird für einen beliebigen Ladezustand (SoC) ein erster Offsetleistungswert bestimmt. Bei der Verwendung der Eco-Offsetkennlinie wird für denselben Ladezustand (SoC) ein zweiter Offsetleistungswert bestimmt. Der erste Offsetleistungswert ist absolut - mit Vorzeichen gesehen - größer als der zweite Offsetleistungswert.

Vorteilhaft ist es mittels der Verwendung der Eco-Offsetkennlinie möglich, die Ladestation länger in dem Passivmodus zu temperieren, als bei Verwendung der Standard-Offsetkennlinie. Insbesondere wird bei Verwendung der Eco-Offsetkennlinie eine stärkere Erwärmung der Ladestation toleriert als bei Verwendung der Standard-Offsetkennlinie.

Gemäß einer Weiterbildung der Erfindung ist vorgesehen, dass ein Blockierkriterium geprüft wird, wobei der Passivmodus nicht aktiviert oder der Passivmodus verlassen wird, wenn das Blockierkriterium erfüllt ist. Auf diese Weise wird vorteilhaft sichergestellt, dass der Passivmodus nur dann verwendet wird, insbesondere zugelassen ist, wenn vorbestimmte Parameter erfüllt sind.

Insbesondere wird das Blockierkriterium vor dem Kühlleistungswertvergleich geprüft. Wenn das Blockierkriterium erfüllt ist, wird insbesondere der Aktivmodus aktiviert oder der Aktivmodus wird beibehalten, insbesondere nicht verlassen. Insbesondere wird dann der Kühlleistungswertvergleich blockiert, insbesondere nicht durchgeführt.

Gemäß einer Weiterbildung der Erfindung ist vorgesehen, dass als das Blockierkriterium geprüft wird, ob mindestens eine der nachfolgenden Bedingungen erfüllt ist: a) eine Energiespeichertemperatur des elektrischen Energiespeichers der Ladestation ist größer als eine vorbestimmte maximale Energiespeichertemperatur; b) die Umgebungstemperatur ist größer als eine vorbestimmte maximale Umgebungstemperatur; und c) die Kühlmediumtemperatur ist größer als eine vorbestimmte maximale Kühlmediumtemperatur.

Gemäß einer Weiterbildung der Erfindung ist vorgesehen, dass das Verfahren wiederholt durchgeführt wird. Vorteilhaft erfolgt auf diese Weise eine kontinuierliche Überwachung der Ladestation, sodass möglichst schnell zwischen dem Passivmodus und dem Aktivmodus gewechselt werden kann.

Insbesondere wird das Verfahren zyklisch, insbesondere nach einer vorbestimmten Zeitdauer, durchgeführt. Insbesondere wird das Verfahren mit einer Frequenz von 1 Hz bis 10 Hz, insbesondere 5 Hz, durchgeführt.

Die Aufgabe wird auch gelöst, indem eine Steuerungsvorrichtung für eine Klimatisierungsvorrichtung einer Ladestation für eine elektrische Vorrichtung, insbesondere ein Elektrofahrzeug, geschaffen wird. Die Steuerungsvorrichtung ist mit der Klimatisierungsvorrichtung steuerungswirkverbindbar, insbesondere steuerungswirkverbunden, und eingerichtet, um ein erfindungsgemäßes Verfahren oder ein Verfahren nach einer oder mehreren der zuvor beschriebenen Ausführungsformen durchzuführen. Die Steuerungsvorrichtung ist mit einer Vorrichtungsschnittstelle wirkverbindbar, insbesondere wirkverbunden, und eingerichtet, um den mindestens einen Ladezustandsparameter eines elektrischen Vorrichtungsenergiespeichers der mit der Vorrichtungsschnittstelle verbundenen elektrischen Vorrichtung zu ermitteln. Insbesondere ist die Steuerungsvorrichtung mit einer Elektrofahrzeugschnittstelle wirkverbindbar, insbesondere wirkverbunden, und eingerichtet, um den mindestens einen Ladezustandsparameter eines elektrischen Antriebsenergiespeichers des mit der Elektrofahrzeugschnittstelle verbundenen Elektrofahrzeugs zu ermitteln. In Zusammenhang mit der Steuerungsvorrichtung ergeben sich insbesondere die Vorteile, die bereits in Zusammenhang mit dem Verfahren erläutert wurden.

In einer Ausführungsform ist die Vorrichtungsschnittstelle, insbesondere die Elektrofahrzeugschnittstelle, eine kombinierte Ladesystem-Schnittstelle (englisch: Combined Charging System; abgekürzt: CCS). Insbesondere ist die Elektrofahrzeugschnittelle eine CCS-Typ 2-Schnittstelle.

Die Aufgabe wird auch gelöst, indem eine Klimatisierungsvorrichtung für eine Ladestation für eine elektrische Vorrichtung, insbesondere für ein Elektrofahrzeug, geschaffen wird. Die Klimatisierungsvorrichtung ist eingerichtet zur Durchführung eines erfindungsgemäßen Verfahrens oder eines Verfahrens nach einer oder mehreren der zuvor beschriebenen Ausführungsformen. Alternativ oder zusätzlich ist vorgesehen, dass die Klimatisierungsvorrichtung eine erfindungsgemäße Steuerungsvorrichtung oder eine Steuerungsvorrichtung nach einer oder mehreren der zuvor beschriebenen Ausführungsformen aufweist. In Zusammenhang mit der Klimatisierungsvorrichtung ergeben sich insbesondere die Vorteile, die bereits in Zusammenhang mit dem Verfahren erläutert wurden.

In einer Ausführungsform weist die Klimatisierungsvorrichtung eine Kompressionskältemaschine mit einem geschlossenen Kältemittelkreislauf auf, der - in der angegebenen Reihenfolge in Strömungsrichtung des Kältemittels - folgende Kältekomponenten aufweist: den Kältemittelverdichter, einen Kondensator, eine Drosselvorrichtung oder ein Entspannungsventil, und einen Verdampfer. Insbesondere ist die Klimatisierungsvorrichtung eingerichtet zur Durchführung des thermodynamischen Kreisprozesses.

In einer Ausführungsform ist die Klimatisierungsvorrichtung eingerichtet, um einen zur Kühlung der Ladestation vorgesehenen - von einem Rückkühlungs-Kühlluftstrom der Rückkühlungs-Kühlluft verschiedenen - Kühlluftstrom zu kühlen. In einer anderen Ausführungsform ist die Klimatisierungsvorrichtung eingerichtet, um einen zur Kühlung der Ladestation vorgesehenen Kühlmedienkreislauf, insbesondere Kühlwasserkreislauf, insbesondere das Wasser-Gylkol-Gemisch, zu kühlen. In wieder einer anderen Ausführungsform ist die Klimatisierungsvorrichtung eingerichtet, um sowohl einen zur Kühlung der Ladestation vorgesehenen Kühlluftstrom als auch einen ebenfalls zur Kühlung der Ladestation vorgesehenen Kühlmedienkreislauf, insbesondere Kühlwasserkreislauf, zu kühlen. Dabei ist es insbesondere möglich, dass mittels des Kühlluftstroms ein elektrischer Energiespeicher der Ladestation gekühlt wird, während mittels des Kühlmedienkreislaufs eine Leistungselektronik der Ladestation gekühlt wird. In einer weiteren Ausführungsform ist insbesondere vorgesehen, dass der Kühlluftstrom, der zur Kühlung des elektrischen Energiespeichers verwendet wird, direkt durch den Kühlmedienkreislauf gekühlt wird, wobei der Kühlmedienkreislauf außerdem direkt die Leistungselektronik der Ladestation gekühlt, und wobei der Kühlmedienkreislauf selbst durch die Klimatisierungsvorrichtung rückgekühlt wird. Insbesondere ist es möglich, dass die Klimatisierungsvorrichtung ausschließlich zur Rückkühlung des Kühlmedienkreislaufs dient, wobei die verschiedenen Komponenten der Ladestation mittelbar oder unmittelbar durch den Kühlmedienkreislauf gekühlt werden.

In einer Ausführungsform weist die Klimatisierungsvorrichtung den ersten Wärmetauscher (Passivkühler) und den zweiten Wärmetauscher (Aktivkühler) auf. Der erste Wärmetauscher und der zweite Wärmetauscher werden insbesondere von demselben Kühlmedium, insbesondere von dem Wasser-Glykol-Gemisch, durchströmt. Insbesondere weist die Klimatisierungsvorrichtung als den Kondensator einen dritten Wärmetauscher auf.

In einer Ausführungsform durchströmt das Kühlmedium in dem Kühlmediumkreislauf ausgehend von der Wärmespeichervorrichtung zunächst eine Kühlmediumfördervorrichtung und anschließend ein Umschaltventil, das den Kühlmediumkreislauf in einen Basispfad und einen erweiterten Pfad schaltbar aufteilt. Im Basispfad durchströmt das Kühlmedium in einer ersten Funktionsstellung des Umschaltventils ausgehend von dem Umschaltventil den zweiten Wärmetauscher (Aktivkühler), insbesondere optional oder in anderer Ausgestaltung zwingend einen vierten Wärmetauscher, der zur Kühlung des dem elektrischen Energiespeicher zugeordneten Kühlluftstroms bestimmt ist, und gelangt zurück in die Wärmespeichervorrichtung. Im erweiterten Pfad durchströmt das Kühlmedium in einer zweiten Funktionsstellung des Umschaltventils ausgehend von dem Umschaltventil den ersten Wärmetauscher (Passivkühler), den zweiten Wärmetauscher (Aktivkühler), insbesondere optional oder in anderer Ausgestaltung zwingend den vierten Wärmetauscher, und gelangt zurück in die Wärmespeichervorrichtung. Insbesondere enthält somit der erweiterte Pfad den Basispfad.

In einer Ausführungsform kann der Aktivmodus wahlweise mit dem Basispfad oder dem erweiterten Pfad, sowie der Passivmodus mit dem erweiterten Pfad betrieben werden. Insbesondere ist der Aktivmodus mit beiden Funktionsstellungen des Umschaltventils betreibbar: Wenn das Umschaltventil im Aktivmodus auf den Basispfad geschaltet ist, wird das Kühlmedium vermittelt über den zweiten Wärmetauscher (Aktivkühler) des thermodynamischen Kreisprozesses, dessen Kompressor aktiviert ist, aktiv gekühlt. Wenn das Umschaltventil im Aktivmodus auf den erweiterten Pfad geschaltet ist, wird das Kühlmedium zunächst mittels des ersten Wärmetauschers (Passivkühlers) passiv gekühlt und anschließend - wie im Aktivmodus bei aktiviertem Basispfad - vermittelt über den zweiten Wärmetauscher (Aktivkühler) des thermodynamischen Kreisprozesses, dessen Kompressor aktiviert ist, aktiv gekühlt. Wenn das Umschaltventil im Passivmodus auf den erweiterten Pfad geschaltet ist, wird das Kühlmedium mittels des ersten Wärmetauschers (Passivkühlers) passiv gekühlt. Anschließend durchströmt das Kühlmedium zwar den zweiten Wärmetauscher (Aktivkühler) des thermodynamischen Kreisprozesses, jedoch ist dessen Kompressor deaktiviert, sodass hier keine Kühlung stattfindet.

Insbesondere wird das Umschaltventil bei relativ heißem Wetter, insbesondere bei relativ heißer Umgebungsluft, auf den Basispfad geschaltet. Somit wird vorteilhaft eine Wärmeübertragung von der Umgebungsluft auf das Kühlmedium mittels des ersten Wärmetauschers (Passivkühlers) vermieden.

In einer Ausführungsform weist der erste Wärmetauscher (Passivkühler) einen ersten Kühlkörper und der dritte Wärmetauscher (Kondensator) einen hiervon verschiedenen, zweiten Kühlkörper auf. Insbesondere sind der erste Kühlkörper und der zweite Kühlkörper benachbart zueinander, insbesondere in Strömungsrichtung der Rückkühlungs-Kühlluft hintereinander, angeordnet. Vorteilhaft kann dieselbe Lüftervorrichtung für den ersten Kühlkörper und den zweiten Kühlkörper verwendet werden.

Die Aufgabe wird auch gelöst, indem eine Ladestation für eine elektrische Vorrichtung, insbesondere für ein Elektrofahrzeug geschaffen wird. Die Ladestation ist eingerichtet, um mit einem erfindungsgemäßen Verfahren oder einem Verfahren nach einer oder mehreren der zuvor beschriebenen Ausführungsformen betrieben zu werden. Alternativ oder zusätzlich ist vorgesehen, dass die Ladestation eine erfindungsgemäße Steuerungsvorrichtung oder eine Steuerungsvorrichtung nach einer oder mehreren der zuvor beschriebenen Ausführungsformen aufweist. Alternativ oder zusätzlich ist vorgesehen, dass die Ladestation eine erfindungsgemäße Klimatisierungsvorrichtung oder eine Klimatisierungsvorrichtung nach einer oder mehreren der zuvor beschriebenen Ausführungsformen aufweist. In Zusammenhang mit der Ladestation ergeben sich insbesondere die Vorteile, die bereits in Zusammenhang mit dem Verfahren erläutert wurden.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform weist die Ladestation einen Energiespeicher auf, ist also insbesondere als batteriegestützte Ladestation, insbesondere als batteriegestützte Schnellladestation, ausgebildet.

In einer Ausführungsform weist die Ladestation zumindest einen Sensor auf, der ausgewählt ist aus einer Gruppe, bestehend aus: Einem Innentemperatursensor, einem Umgebungslufttemperatursensor, einem Energiespeichertemperatursensor des Energiespeichers der Ladestation und einem Wärmespeichervorrichtungstemperatursensor der Wärmespeichervorrichtung der Ladestation. In einer Ausführungsform weist die Ladestation, insbesondere aus Redundanzgründen, einen der ausgewählten Sensoren mehrfach, insbesondere doppelt auf.

In einer Ausführungsform wird die Ladestation bei einem Sensorausfall - sofern dieser Sensor nicht ein zweites Mal vorhanden oder der zweite Sensor nicht funktionstüchtig ist - im Aktivmodus temperiert. Insbesondere wird eine Fehlermeldung über eine kabelgebundene oder drahtlose Datenverbindung, insbesondere an eine Zentrale, übermittelt.

Es ist möglich, dass das Umschaltventil, welches den Kühlkreislauf der Klimatisierungsvorrichtung zwischen der ersten Funktionsstellung (Basispfad) und der zweiten Funktionsstellung (erweiterter Pfad) umschaltet, nicht mehr funktioniert. In diesem Fall kann der Kühlkreislauf nicht mehr zwischen dem erweiterten Pfad und dem Basispfad umgeschaltet werden. Wurde die Ladestation direkt vor dem Ventildefekt im Aktivmodus mit aktiviertem Basispfad oder erweitertem Pfad temperiert, kann eine Fehlermeldung an die Zentrale übermittelt werden. Eine Warnung für den Anwender wird nicht zwingend angezeigt, da die Ladestation sowieso in dem Aktivmodus temperiert wird. Wurde die Ladestation direkt vor dem Ventildefekt im Aktivmodus mit aktiviertem Basispfad temperiert, ist ein Umschalten in den Passivmodus - der den erweiterten Pfad voraussetzt - jedoch nicht mehr möglich. Wenn die Ladestation direkt vor dem Ventildefekt im Passivmodus mit aktiviertem erweitertem Pfad temperiert wurde, kann ebenfalls eine Fehlermeldung an die Zentrale übermittelt werden. Eine Warnung für den Anwender wird auch hier nicht zwingend angezeigt, da von dem Passivmodus in den Aktivmodus gewechselt werden kann, indem der Kompressor des thermodynamischen Kreisprozesses aktiviert wird.

Ein in der ersten Funktionsstellung (Basispfad) stehengebliebenes, defektes Umschaltventil wirkt sich somit derart aus, dass der Passivmodus nicht mehr aktiviert werden kann. Dies führt nachteilig zu höheren Betriebskosten, da im Aktivmodus der Kompressor betrieben wird. Ein in der zweiten Funktionsstellung (erweiterter Pfad) stehengebliebenes, defektes Umschaltventil wirkt sich derart aus, dass eine Wärmeübertragung von der Umgebungsluft auf das Kühlmedium mittels des ersten Wärmetauschers (Passivkühlers) bei heißem Wetter nicht mehr vermieden werden kann. Dies führt nachteilig ebenfalls zu höheren Betriebskosten, da die mittels des ersten Wärmetauschers (Passivkühlers) in das Kühlmedium eingebrachte Wärme von dem thermodynamischen Kreisprozess wieder entzogen werden muss.

In einer Ausführungsform wird die Ladestation ferngesteuert, insbesondere mittels einer kabelgebundenen oder drahtlosen Datenverbindung von der Zentrale, zwischen dem Passivmodus und dem Aktivmodus umgeschaltet.

Die Erfindung wird im Folgenden anhand der Zeichnung näher erläutert. Dabei zeigen:
- Fig. 1: eine schematische Darstellung eines ersten Ausführungsbeispiels einer Ladestation,
- Fig. 2: eine schematisches Prozessdiagramm eines ersten Ausführungsbeispiels eines Verfahrens zum Betreiben einer Klimatisierungsvorrichtung der Ladestation gemäß Figur 1, und
- Fig. 3: eine schematisches Prozessdiagramm eines zweiten Ausführungsbeispiels eines Verfahrens zum Betreiben der Klimatisierungsvorrichtung der Ladestation gemäß Figur 1.

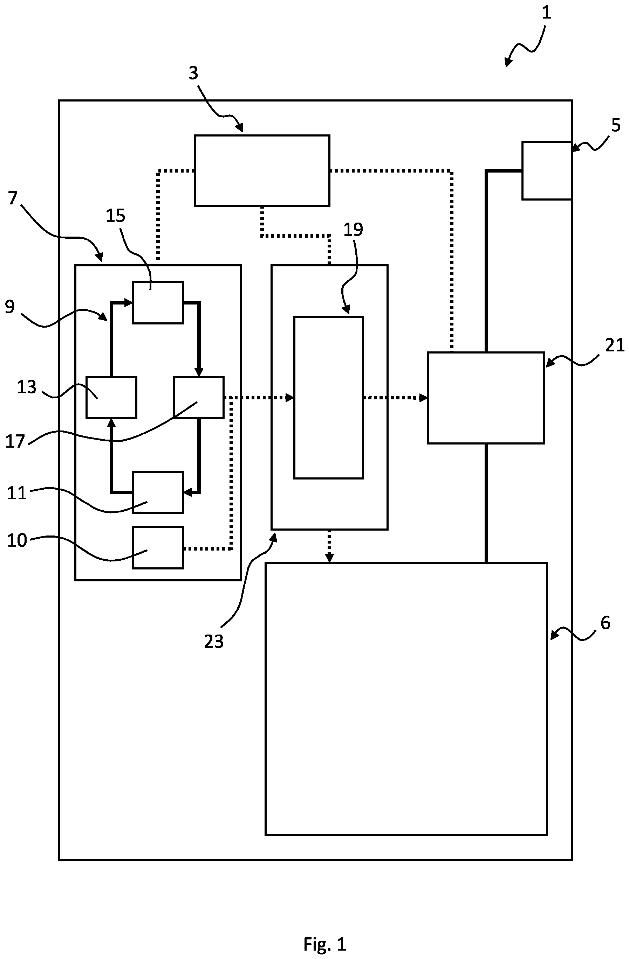

**Figur 1** zeigt eine schematische Darstellung eines ersten Ausführungsbeispiels einer Ladestation 1 insbesondere für Elektrofahrzeuge, mit einem Ausführungsbeispiel einer Steuerungsvorrichtung 3.

Die Ladestation 1 weist mindestens einen als Vorrichtungsschnittstelle 5 ausgebildeten Ladepunkt auf, wobei an jedem Ladepunkt jeweils beispielsweise ein Elektrofahrzeug geladen werden kann. Außerdem weist die Ladestation 1 einen elektrischen Energiespeicher 6 zur Zwischenspeicherung von elektrischer Energie zum Laden insbesondere von Elektrofahrzeugen auf. Die Ladestation 1 kann an ein Stromnetz angeschlossen sein, wobei dann der elektrische Energiespeicher 6 regelmäßig aus dem Stromnetz geladen wird; sie kann aber auch als mobile Ladestation 1 ausgebildet sein, die unabhängig von einem Stromnetz betrieben werden kann, wobei dann der elektrische Energiespeicher 6 nur sporadisch, insbesondere bei Bedarf, nachgeladen wird.

Weiter weist die Ladestation 1 eine Klimatisierungsvorrichtung 7 auf, die hier als Kompressionskältemaschine zur Durchführung eines thermodynamischen Kreisprozesses ausgebildet ist. Sie weist einen geschlossenen Kältemittelkreislauf 9 auf, der - in der angegebenen Reihenfolge in Strömungsrichtung des Kältemittels - folgende Kältekomponenten aufweist: einen Kältemittelverdichter 11, einen Kondensator 13, eine Drosselvorrichtung 15 und einen Verdampfer 17. Die Klimatisierungsvorrichtung 7 weist ferner einen als ersten Wärmetauscher ausgebildeten Passivkühler 10 auf, der mittels Konvektion, insbesondere mittels einer aus der Umgebungsluft angesaugten Rückkühlungs-Kühlluft temperiert wird. Insbesondere ist der Verdampfer 17 ein zweiter Wärmetauscher. Insbesondere ist der Kondensator 13 ein dritter Wärmetauscher.

Insbesondere ist die Klimatisierungsvorrichtung 7 eingerichtet, um einen zur Kühlung der Ladestation 1 vorgesehenen Kühlmedienkreislauf 19, insbesondere einen Kühlwasserkreislauf, rückzukühlen. Dies kann mittels des ersten Wärmetauschers (Passivkühlers 10) stattfinden. Alternativ oder zusätzlich kann dies mittels des dritten Wärmetauschers (Verdampfer 17 als Aktivkühler) stattfinden. Der Kühlmedienkreislauf 19 wiederum kühlt vorzugsweise direkt eine Leistungselektronik 21 der Ladestation 1 und zusätzlich einen Kühlluftstrom, wobei mittels des Kühluftstroms der elektrische Energiespeicher 6 der Ladestation 1 gekühlt wird.

Der Kühlmedienkreislauf 19 ist insbesondere Teil einer Kühlvorrichtung, die außer dem Kühlmedienkreislauf 19 beispielsweise noch Ventilatoren, insbesondere einen Ventilator zur Erzeugung des Kühlluftstroms zur Kühlung des elektrischen Energiespeichers 6 und/oder einen Ventilator zur Erzeugung des Rückkühlungs-Kühlluftstroms zur Kühlung des Passivkühlers 10, umfassen kann.

Die Klimatisierungsvorrichtung 7 und die Steuerungsvorrichtung 3 sind insbesondere eingerichtet zur Durchführung eines im Folgenden näher beschriebenen Verfahrens.

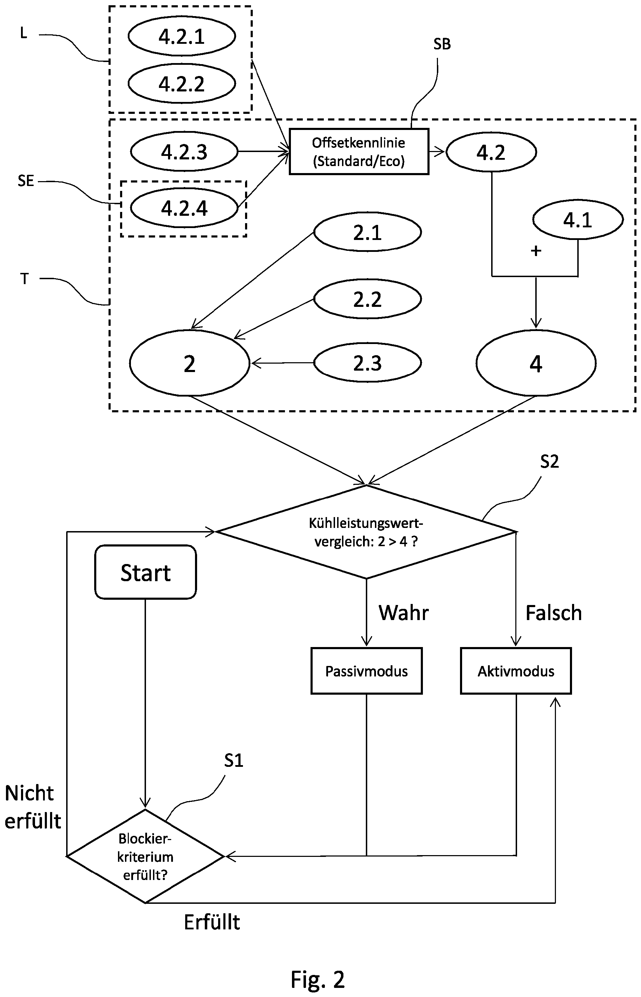

**Figur 2** zeigt eine schematisches Prozessdiagramm eines ersten Ausführungsbeispiels eines Verfahrens zum Betreiben der Klimatisierungsvorrichtung 7 der Ladestation 1 gemäß Figur 1.

Die Klimatisierungsvorrichtung 7 ist eingerichtet, um die Ladestation 1 wahlweise in einem Aktivmodus aktiv und in einem Passivmodus passiv zu temperieren. In Abhängigkeit von einem Thermozustand T der Ladestation 1 und zumindest einem Ladezustandsparameter L, der insbesondere charakteristisch ist für einen Ladezustand 4.2.1 eines elektrischen Antriebsenergiespeichers eines mit der Ladestation 1 verbundenen Elektrofahrzeugs wird zwischen dem Passivmodus und dem Aktivmodus gewechselt.

Das Verfahren läuft gemäß dem ersten Ausführungsbeispiel wie folgt ab: In einem ersten Schritt S1 ist vorgesehen, dass ein Blockierkriterium geprüft wird, wobei der Passivmodus nicht aktiviert oder der Passivmodus verlassen wird, wenn das Blockierkriterium erfüllt ist. Insbesondere wird das Blockierkriterium zu Beginn und während des Verfahrens geprüft. Wenn das Blockierkriterium erfüllt ist, wird insbesondere der Aktivmodus aktiviert oder der Aktivmodus wird beibehalten, insbesondere nicht verlassen. Insbesondere wird ein Kühlleistungswertvergleich blockiert, insbesondere nicht durchgeführt.

Wenn das Blockierkriterium nicht erfüllt ist, wird in einem zweiten Schritt S2 der Kühlleistungswertvergleich durchgeführt. Dabei ist vorgesehen, dass der Passivmodus aktiviert wird, wenn der durchgeführte Kühlleistungswertvergleich, insbesondere eine Kapazitätsprüfung, insbesondere eine Kühlkapazitätsprüfung, ergibt, dass ein maximaler passiver Kühlleistungswert 2, der charakteristisch für eine, insbesondere momentan, maximal mögliche passive Kühlleistung der Klimatisierungsvorrichtung 7 ist, größer ist als eine Summe 4 aus einem Wärmeverlustleistungswert 4.1 und einem Offsetleistungswert 4.2. Der Offsetleistungswert 4.2 wird abhängig von dem zumindest einen Ladezustandsparameter L des Antriebsenergiespeichers des mit der Ladestation 1 verbundenen Elektrofahrzeugs und einem Wärmeverlustleistungsparameter 4.2.3 bestimmt.

In diesem Ausführungsbeispiel ist vorgesehen, dass das Verfahren wiederholt durchgeführt wird. Insbesondere wird das Verfahren zyklisch, insbesondere nach einer vorbestimmten Zeitdauer, durchgeführt. Insbesondere wird das Verfahren mit einer Frequenz von 1 Hz bis 10 Hz, insbesondere 5 Hz, durchgeführt.

Die für das Verfahren notwendigen Eingangsgrößen ergeben sich wie folgt:
In diesem Ausführungsbeispiel ist vorgesehen, dass der Thermozustand T der Ladestation 1 durch folgende Zustandsparameter bestimmt ist: Eine Kühlmediumtemperatur 2.1 eines Kühlmediums der Klimatisierungsvorrichtung 7, einen Wärmeverlustleistungswert 4.1, der charakteristisch für einen Wärmeverlust elektrischer Komponenten, insbesondere der Leistungselektronik 21, der Ladestation 1 ist, eine Umgebungstemperatur 2.2, insbesondere Umgebungslufttemperatur, und eine Lüfterdrehzahl 2.3 einer Lüftervorrichtung der Ladestation 1.

In einem anderen Ausführungsbeispiel ist vorgesehen, dass der Thermozustand T der Ladestation 1 zusätzlich durch wenigstens einen weiteren Zustandsparameter bestimmt ist, der ausgewählt ist aus einer Gruppe, bestehend aus: Einer Innentemperatur der Ladestation 1, einer Energiespeichertemperatur eines elektrischen Energiespeichers 6 der Ladestation 1, einer Kondensationstemperatur, eines Kondensationsdrucks des Kältemittels, und einer Kombination von wenigstens zwei dieser Zustandsparameter.

In diesem Ausführungsbeispiel ist der mindestens eine Ladezustandsparameter L ausgewählt, insbesondere berechnet, aus dem insbesondere momentanen Ladezustand 4.2.1 (englisch: State of Charge; abgekürzt: SoC) des Vorrichtungsenergiespeichers selbst und einer insbesondere momentan maximal möglichen Ladeleistung 4.2.2 des Vorrichtungsenergiespeichers.

In einem nicht dargestellten, anderen Ausführungsbeispiel ist vorgesehen, dass der mindestens eine Ladezustandsparameter L zusätzlich ein insbesondere momentan verbleibender Ladezustand (englisch: Remaining SoC) des Vorrichtungsenergiespeichers ist.

In diesem Ausführungsbeispiel ist vorgesehen, dass als das Blockierkriterium geprüft wird, ob mindestens eine der nachfolgenden Bedingungen erfüllt ist: a) eine Energiespeichertemperatur des elektrischen Energiespeichers 6 der Ladestation 1 ist größer als eine vorbestimmte maximale Energiespeichertemperatur; b) die Umgebungstemperatur 2.2 ist größer als eine vorbestimmte maximale Umgebungstemperatur; und c) die Kühlmediumtemperatur 2.1 ist größer als eine vorbestimmte maximale Kühlmediumtemperatur.

Der Wärmeverlustleistungsparameter 4.2.3 enthält insbesondere einen oder mehrere Wärmeverlustleistungsteilwerte, die nicht in dem Wärmeverlustleistungswert 4.1 enthalten sind, wie beispielsweise einen Wärmeverlustleistungswert von einer Anzeigevorrichtung der Ladestation 1.

In diesem Ausführungsbeispiel ist vorgesehen, dass der Offsetleistungswert 4.2 mittels einer Offsetkennlinie in einem Bestimmungsschritt SB bestimmt wird. Die Offsetkennlinie weist als zumindest einen Eingangswert den Ladezustandsparameter L und den Wärmeverlustleistungsparameter 4.2.3, und als Ausgangswert den Offsetleistungswert 4.2 auf.

In diesem Ausführungsbeispiel ist vorgesehen, dass vor der Bestimmung des Offsetleistungswerts 4.2 in einem Ermittlungsschritt SE ermittelt wird, ob ein Energiesparmodus 4.2.4 der Ladestation 1 aktiviert ist. Bei aktiviertem Energiesparmodus 4.2.4 wird als die Offsetkennlinie eine Eco-Offsetkennlinie zur Bestimmung des Offsetleistungswerts 4.2 verwendet, ansonsten eine Standard-Offsetkennlinie.

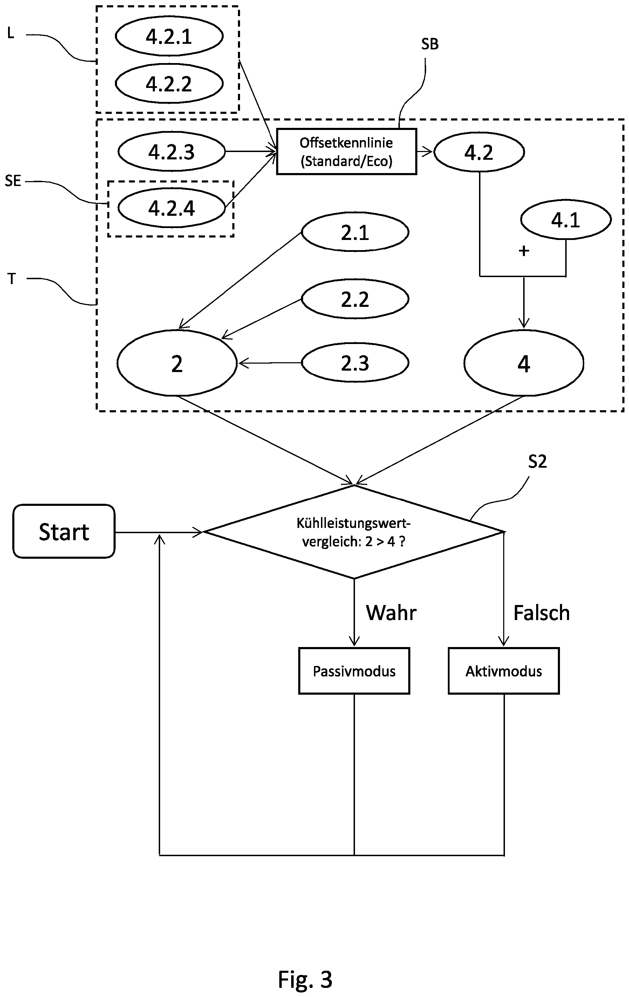

In diesem Ausführungsbeispiel ist vorgesehen, dass die Abfrage der Eingangsgrößen wiederholt durchgeführt wird. Insbesondere wird die Abfrage der Eingangsgrößen zyklisch, insbesondere nach einer vorbestimmten Zeitdauer, durchgeführt. Insbesondere wird die Abfrage der Eingangsgrößen mit einer Frequenz von 1 Hz bis 10 Hz, insbesondere 5 Hz, durchgeführt. **Figur 3** zeigt eine schematisches Prozessdiagramm eines zweiten Ausführungsbeispiels eines Verfahrens zum Betreiben der Klimatisierungsvorrichtung 7 der Ladestation 1 gemäß Figur 1.

Dabei sind gleiche und funktionsgleiche Elemente in allen Figuren mit gleichen Bezugszeichen versehen, sodass insoweit jeweils auf die vorangegangene Beschreibung verwiesen wird.

Das Verfahren gemäß Figur 3 unterscheidet sich gegenüber dem Verfahren gemäß Figur 2 dadurch, dass der erste Schritt S1, nämlich die Prüfung auf das Blockierkriterium, entfällt, insbesondere nicht durchgeführt wird.

In diesem Ausführungsbeispiel wird der zweite Schritt S2, nämlich der Kühlleistungswertvergleich, zu Beginn des Verfahrens durchgeführt. Dabei ist, wie auch in dem Verfahren in Figur 2, vorgesehen, dass der Passivmodus aktiviert wird, wenn der durchgeführte Kühlleistungswertvergleich, insbesondere die Kapazitätsprüfung, insbesondere die Kühlkapazitätsprüfung, ergibt, dass der maximale passive Kühlleistungswert 2, der charakteristisch für die, insbesondere momentan, maximal mögliche passive Kühlleistung der Klimatisierungsvorrichtung 7 ist, größer ist als die Summe 4 aus dem Wärmeverlustleistungswert 4.1 und dem Offsetleistungswert 4.2. Der Offsetleistungswert 4.2 wird abhängig von dem Ladezustandsparameter L des Antriebsenergiespeichers des mit der Ladestation 1 verbundenen Elektrofahrzeugs und dem Wärmeverlustleistungsparameter 4.2.3 bestimmt.

Insbesondere wird auch bei diesem Ausführungsbeispiel das Verfahren wiederholt durchgeführt. Insbesondere wird das Verfahren zyklisch, insbesondere nach einer vorbestimmten Zeitdauer, durchgeführt. Insbesondere wird das Verfahren mit einer Frequenz von 1 Hz bis 10 Hz, insbesondere 5 Hz, durchgeführt.

Insbesondere wird auch bei diesem Ausführungsbeispiel die Abfrage der Eingangsgrößen wiederholt durchgeführt. Insbesondere wird die Abfrage der Eingangsgrößen zyklisch, insbesondere nach einer vorbestimmten Zeitdauer, durchgeführt. Insbesondere wird die Abfrage der Eingangsgrößen mit einer Frequenz von 1 Hz bis 10 Hz, insbesondere 5 Hz, durchgeführt.

## Patentansprüche

1. Verfahren zum Betreiben einer Klimatisierungsvorrichtung (7) einer Ladestation (1) für eine elektrische Vorrichtung, wobei die Klimatisierungsvorrichtung (7) eingerichtet ist, um die Ladestation (1) wahlweise in einem Aktivmodus aktiv und in einem Passivmodus passiv zu temperieren, wobei in Abhängigkeit von einem Thermozustand (T) der Ladestation (1) und mindestens einem Ladezustandsparameter (L) eines elektrischen Vorrichtungsenergiespeichers der mit der Ladestation (1) verbundenen elektrischen Vorrichtung zwischen dem Passivmodus und dem Aktivmodus gewechselt wird.

2. Verfahren nach Anspruch 1, wobei der Thermozustand (T) der Ladestation (1) durch wenigstens einen Zustandsparameter bestimmt ist, der ausgewählt ist aus einer Gruppe, bestehend aus: Einer Innentemperatur der Ladestation (1), einer Energiespeichertemperatur eines elektrischen Energiespeichers (7) der Ladestation (1), einer Kühlmediumtemperatur (2.1) eines Kühlmediums der Klimatisierungsvorrichtung (7), einem Wärmeverlustleistungswert (4.1), der charakteristisch für einen Wärmeverlust elektrischer Komponenten der Ladestation (1) ist, einer Umgebungstemperatur (2.2), insbesondere Umgebungslufttemperatur, einer Lüfterdrehzahl (2.3) einer Lüftervorrichtung der Ladestation (1), einer Kondensationstemperatur, eines Kondensationsdrucks des Kältemittels, und einer Kombination von wenigstens zwei dieser Zustandsparameter.

3. Verfahren nach einem der vorhergehenden Ansprüche, wobei
- der Passivmodus aktiviert wird, wenn ein Kühlleistungswertvergleich ergibt, dass ein maximaler passiver Kühlleistungswert (2), der charakteristisch für eine maximal mögliche passive Kühlleistung der Klimatisierungsvorrichtung (7) ist, größer ist als eine Summe (4) aus dem Wärmeverlustleistungswert (4.1) und einem Offsetleistungswert (4.2), wobei
- der Offsetleistungswert (4.2) abhängig von dem mindestens einen Ladezustandsparameter (L) des Vorrichtungsenergiespeichers der mit der Ladestation (1) verbundenen elektrischen Vorrichtung bestimmt wird.

4. Verfahren nach einem der vorhergehenden Ansprüche, wobei
- der Offsetleistungswert (4.2) mittels einer Offsetkennlinie bestimmt wird, wobei
- die Offsetkennlinie als zumindest einen Eingangswert den mindestens einen Ladezustandsparameter (L) und als Ausgangswert den Offsetleistungswert (3.2) aufweist.

5. Verfahren nach einem der vorhergehenden Ansprüche, wobei
- vor der Bestimmung des Offsetleistungswerts (4.2) ermittelt wird, ob ein Energiesparmodus (4.2.4) der Ladestation (1) aktiviert ist, wobei
- bei aktiviertem Energiesparmodus (4.2.4) als die Offsetkennlinie eine Eco-Offsetkennlinie zur Bestimmung des Offsetleistungswerts (4.2) verwendet wird.

6. Verfahren nach einem der vorhergehenden Ansprüche, wobei ein Blockierkriterium geprüft wird, wobei der Passivmodus nicht aktiviert oder der Passivmodus verlassen wird, wenn das Blockierkriterium erfüllt ist.

7. Verfahren nach Anspruch 6, wobei als das Blockierkriterium geprüft wird, ob mindestens eine der nachfolgenden Bedingungen erfüllt ist:
a) eine Energiespeichertemperatur des elektrischen Energiespeichers (6) der Ladestation (1) ist größer als eine vorbestimmte maximale Energiespeichertemperatur;
b) die Umgebungstemperatur (2.2) ist größer als eine vorbestimmte maximale Umgebungstemperatur; und
c) die Kühlmediumtemperatur (2.1) ist größer als eine vorbestimmte maximale Kühlmediumtemperatur.

8. Verfahren nach einem der vorhergehenden Ansprüche, wobei das Verfahren wiederholt durchgeführt wird.

9. Steuerungsvorrichtung für eine Klimatisierungsvorrichtung (7) einer Ladestation (1) für eine elektrische Vorrichtung, wobei
- die Steuerungsvorrichtung (3) mit der Klimatisierungsvorrichtung (7) steuerungswirkverbindbar und eingerichtet ist, um ein Verfahren nach einem der vorhergehenden Ansprüche durchzuführen, wobei
- die Steuerungsvorrichtung (3) mit einer Vorrichtungsschnittstelle (5) wirkverbindbar und eingerichtet ist, um den mindestens einen Ladezustandsparameter (L) eines elektrischen Vorrichtungsenergiespeichers der mit der Vorrichtungsschnittstelle verbundenen elektrischen Vorrichtung zu ermitteln.

10. Klimatisierungsvorrichtung (7) für eine Ladestation (1) für eine elektrische Vorrichtung, wobei
- die Klimatisierungsvorrichtung (7) eingerichtet ist zur Durchführung eines Verfahren nach einem der Ansprüche 1 bis 8, und/oder
- die Klimatisierungsvorrichtung (7) eine Steuerungsvorrichtung (3) nach Anspruch 9 aufweist.

11. Ladestation (1) für eine elektrische Vorrichtung, wobei
- die Ladestation (1) eingerichtet ist, um mit einem Verfahren nach einem der Ansprüche 1 bis 8 betrieben zu werden, und/oder
- die Ladestation (1) eine Steuerungsvorrichtung (3) nach Anspruch 9, und/oder
- eine Klimatisierungsvorrichtung (7) nach Anspruch 10 aufweist.
